# EUROPEAN PATENT APPLICATION

(11) **EP 4 644 116 A1**
(43) Date of publication of application: **05.11.2025**
(21) Application number: 25171718.7
(22) Date of filing: 22.04.2025
(51) Int. Cl.: B32B 15/08, B32B 7/027, B32B 7/12, B32B 15/20, B32B 27/08, B32B 27/34, B32B 27/36

(54) **POLYAMIDE-BASED DRUG RESISTANT LAMINATE**

(30) Priority: 23.04.2024 US 202418643543
(71) Applicant: Winpak Ltd., Winnipeg, MB R3J 3T3 (CA)
(72) Inventor: BILGEN, Mustafa, Fayettville, 30215 (US); FILY, Sébastien, Montréal, H1Z 2P9 (CA); VENTURA, Lionel, Montréal, H4A 2K9 (CA)
(74) Representative: Potter Clarkson

(57) **Abstract**

A drug resistant laminate is provided. The drug resistant laminate includes a polyamide sealing layer, an aluminum foil layer, and a support layer. The polyamide sealing layer is configured to contact a drug. The aluminum foil layer is affixed to the polyamide sealing layer via a first lamination layer. The support layer is affixed to the aluminum foil layer via a second lamination layer. The polyamide sealing layer may be a coextruded layer including a sealing sublayer arranged to contact the drug and a backing sublayer arranged to be affixed to the aluminum foil layer via the first lamination layer. A melting point of the sealing sublayer may be is less than a melting point of the backing sublayer. Similarly, a melting point of the support layer may be greater than the melting point of the backing sublayer of the polyamide sealing layer.

## Description

### Field of the Disclosure

The present disclosure is generally directed to a polyamide-based drug resistant laminate.

### Background

Pharmaceutical packaging requires scalping-resistant materials. Scalping refers to the migration or absorption of a pharmaceutical drug into the packaging structure. Drug delivery patches providing pain relieving medication are often prescribed as a localized pain reliever. In other examples, the drug delivery patches may be used to provide other types of treatment, such as treatment for drug withdrawal. These drug delivery patches are stored in pouches which must be flexible to enable opening, as well as drug resistant to prevent scalping of the drug found in the patch. Current packaging laminates with anti-scalping properties typically include materials such as polyacrylonitrile (also referred to as Barex^{®}) or cyclic olefin copolymers (COC). While these materials provide good drug resistance, they are not readily available, are difficult to process using typical extrusion equipment, and are generally expensive to produce.

### Summary of the Disclosure

The present disclosure provides an anti-scalping, polyamide-based, drug resistant laminate for packaging transdermal patches or other pharmaceutical products carrying drugs such as lidocaine, nicotine, fentanyl, and others. The drug resistant laminate includes a polyamide sealing layer laminated to an aluminum foil layer to prevent drug absorption or permeation, with additional layers being affixed to the aluminum foil layer for strength and support. The types of lamination used affix the polyamide sealing layer to the aluminum foil layer may include adhesive lamination, extrusion lamination, or heat lamination. In some examples, the drug resistant laminate forms a pouch surrounding a pharmaceutical product carrying the drug, such as a transdermal drug delivery patch. The drug resistant properties of the laminate prevents the drug of the pharmaceutical product from breaching and being absorbed by the pouch. The pouch is formed by heat-sealing two drug resistant laminates together or by folding one drug resistant laminate and then heat-sealing the laminate to itself.

The polyamide sealing layer may be formed via coextrusion of at least two sublayers, namely, a sealing sublayer arranged to contact the drug and a backing sublayer arranged to be affixed to the aluminum foil layer. The sealing sublayer and the backing sublayer may be made of different polyamide resins such that the sealing sublayer has a lower melting point than the backing sublayer, enabling the sealing sublayer to more easily seal to another drug resistant laminate to form the pouch without melting other components of the drug resistant laminate. Further, once coextruded, the polyamide sealing layer may be stretched to mono- or bi-directionally orient the polyamide sealing layer, thereby improving the drug resistant properties of the polyamide sealing layer. Additionally, in some examples, the support layer may include polyamide or biaxially oriented polyethylene terephthalate (BOPET).

Generally, in one aspect, a drug resistant laminate is provided. The drug resistant laminate includes a polyamide sealing layer. The polyamide sealing layer is configured to contact a drug.

The drug resistant laminate further includes an aluminum foil layer. The aluminum foil layer is affixed to the polyamide sealing layer via a first lamination layer.

The drug resistant laminate further includes a support layer. The support layer is affixed to the aluminum foil layer via a second lamination layer.

According to an example, the polyamide sealing layer is a coextruded layer. The coextruded layer includes a sealing sublayer arranged to contact the drug and a backing sublayer arranged to be affixed to the aluminum foil layer via the first lamination layer. A melting point of the sealing sublayer may be less than a melting point of the backing sublayer. The melting point of the sealing sublayer may be approximately 130 degrees Celsius to 150 degrees Celsius. The polyamide sealing layer may include one or more of polyamide 6, polyamide 6.6, and/or polyamide 12. A melting point of the support layer may be greater than a melting point of the backing sublayer of the polyamide sealing layer.

According to an example, a melting point of the support layer is 200 degrees Celsius to 250 degrees Celsius.

According to an example, the polyamide sealing layer is mono-directionally oriented.

According to an example, the polyamide sealing layer is bi-directionally oriented.

According to an example, the support layer includes polyamide.

According to an example, the support layer includes BOPET.

According to an example, the drug is lidocaine, nicotine, fentanyl, estradiol, clonidine, ethinyl estradiol, oxybutynin, buprenorphine, granisitron, methylphenidate, scopolamine, acetylfentanyl, or rivastigmine.

According to an example, the support layer is approximately 5 microns thick to 100 microns thick.

According to an example, the aluminum foil layer is approximately 5 microns thick to 30 microns thick.

According to an example, the polyamide sealing layer is approximately 5 microns thick to 100 microns thick.

Generally, in another aspect, a method for manufacturing a drug resistant film is provided. The method includes: (1) forming a polyamide sealing layer configured to contact a drug; (2) affixing, via a first lamination layer, an aluminum foil layer to the polyamide sealing layer; and (3) affixing, via a second lamination layer, a support layer to the aluminum foil layer.

According to an example, forming the polyamide sealing layer includes mono-axially or bi-axially stretching the polyamide sealing layer.

According to an example, forming the polyamide sealing layer includes coextruding a sealing sublayer arranged to contact the drug and a backing sublayer arranged to be affixed to the aluminum foil layer via the first lamination layer.

According to an example, a melting point of the sealing sublayer is less than a melting point of the backing sublayer.

According to an example a melting point of the support layer is greater than a melting point of the backing sublayer of the polyamide sealing layer.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a front cross-sectional view of a drug resistant laminate, according to the present disclosure.
FIG. 2 is a front cross-sectional view of a drug resistant laminate having a coextruded polyamide sealing layer, according to the present disclosure.
FIG. 3 is a front cross-sectional view of a drug resistant laminate having a further example of a coextruded polyamide sealing layer, according to the present disclosure.
FIG. 4 illustrates a pharmaceutical product arranged in a pouch, according to the present disclosure.
FIG. 5 is a flow chart of the steps of a method for manufacturing a drug resistant laminate, according to the present disclosure.

### Detailed Description of Embodiments

The present disclosure provides an anti-scalping, polyamide-based, drug resistant laminate for packaging transdermal patches or other pharmaceutical products carrying drugs such as lidocaine, nicotine, fentanyl, and others. The drug resistant laminate includes a polyamide sealing layer laminated to an aluminum foil layer to prevent drug absorption or permeation, with additional layers being affixed to the aluminum foil layer for strength and support. In some examples, the drug resistant laminate forms a pouch surrounding a pharmaceutical product carrying the drug, such as a transdermal drug delivery patch. The drug resistant properties of the laminate prevents the drug of the pharmaceutical product from breaching and being absorbed by the pouch. The pouch is formed by heat-sealing two drug resistant laminates together or by folding one drug resistant laminate and then heat-sealing the laminate to itself.

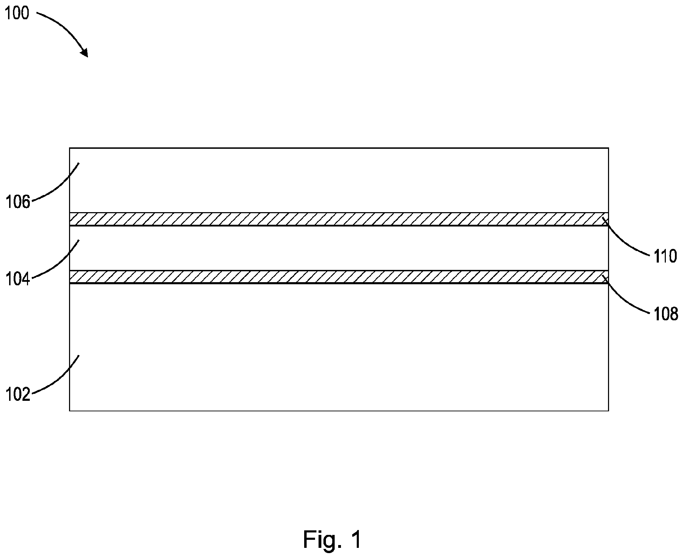

Transitioning now to the figures, FIG. 1 illustrates a front cross-sectional view of a drug resistant laminate 100. The drug resistant laminate 100 may form a pouch, sachet, or other variety of package to contain a pharmaceutical product to deliver a drug to a patient. In some examples, the pharmaceutical product could be a transdermal delivery patch configured to deliver a drug such as lidocaine, nicotine, fentanyl, estradiol, clonidine, ethinyl estradiol, oxybutynin, buprenorphine, granisitron, methylphenidate, scopolamine, acetylfentanyl, rivastigmine, etc.

Broadly, the drug resistant film 100 includes a polyamide sealing layer 102, an aluminum foil layer 104, and a support layer 106. In some examples, one or more of the aforementioned layers may be formed from two or more identical sublayers, thus functioning as a single layer. The polyamide sealing layer 102 is configured to contact the drug when the pharmaceutical product is arranged within the pouch or package. In some examples, the polyamide sealing layer 102 may be referred to as a drug contact layer or contact layer. Further, in some non-limiting examples, the drug resistant laminate 100 may be configured to fold such that the polyamide sealing layer 102 may be heat sealed to itself to form a pouch 500. Alternatively, in other non-limiting examples, the pouch 500 may be formed by heat sealing the polyamide sealing layers 102 of two drug resistant laminates 100. Three sides of two rectangular drug resistant laminates 100 may be sealed together to form a three-sided seal. The polyamide sealing layer 102 is configured to prevent the drug resistant laminate 100 from absorbing the drug carried by the pharmaceutical product.

The polyamide sealing layer 102 may be a cast extruded layer of polyamide resin. In a non-limiting example, the extruded layer of polyamide resin is stretched while being heated such that the polyamide sealing layer 102 is mono-directionally oriented or bi-directionally oriented. Orienting the polyamide aligns polymers of the polyamide resin closer to each other, thereby reducing voids for chemicals and pharmaceutical agents to penetrate the polyamide sealing layer 102 and improving the anti-scalping properties of the polyamide sealing layer 102. In a non-limiting example, the extruded layer of polyamide may include one or more types of polyamide, such as polyamide 6, polyamide 6.6, and/or polyamide 12. In one example, the polyamide sealing layer 102 is approximately 15 microns thick. In another example, the polyamide sealing layer 102 may have a thickness between 5 microns and 100 microns. Preferably, the polyamide sealing layer 102 has a thickness between 5 microns and 25 microns to limit material costs.

FIG. 1 further illustrates an aluminum foil layer 104 affixed to the polyamide sealing layer 102 via a first lamination layer 108. Generally, the aluminum foil layer 104 provides an additional moisture and oxygen barrier between the polyamide sealing layer 102 and the support layer 106. The aluminum foil layer 104 may have a thickness of approximately 9 microns. In another example, the aluminum foil layer 104 may have a thickness between 5 microns and 30 microns. Preferably, the aluminum foil layer 104 has a thickness between 7 microns and 15 microns to limit material costs.

The first lamination layer 108 affixes the polyamide sealing layer 102 to the aluminum foil layer 104 via any practical lamination process, such as adhesive lamination, extrusion lamination, or heat lamination. In adhesive lamination, either the polyamide sealing layer 102 or the aluminum foil layer 104 is coated with the first lamination layer 108. The polyamide sealing layer 102 and the aluminum foil layer 104 are then pressed together, thereby affixing the layers 102, 104 via the first lamination layer 108. In adhesive lamination, the first lamination layer 108 may be any appropriate solvent-based, water-based, or solventless adhesive. The first lamination layer 108 may be approximately 2 to 3 grams per square meter thick. In extrusion lamination, the first lamination layer 108 is an extruded molten polymer resin used to affix the polyamide sealing layer 102 to the aluminum foil layer 104. In heat lamination, the first lamination layer 108 is an adhesive which must be heated to affix the polyamide sealing layer 102 to the aluminum foil layer 104.

FIG. 1 further illustrates a support layer 106 affixed to the aluminum foil layer 104 via a second lamination layer 110. Generally, the support layer 106 provides physical structure and support to the drug resistant laminate 100. In one non-limiting example, the support layer 106 may have a thickness of approximately 12 microns. In another example, the support layer 106 may have a thickness between 5 microns and 100 microns. Preferably, the support layer 106 has a thickness between 8 microns and 25 microns to limit material costs. In some examples, the support layer 106 may be polyamide. In other examples, the support layer 106 may be biaxially oriented polyethylene terephthalate (BOPET), which is a type of polyester. Generally, BOPET is the preferred material of the support layer 106 due to having a high melting point and being a relatively inexpensive material to produce. However, in other examples, other types of polyester films may be used for the support layer 106, such as polybutylene terephthalate (PBT). In even further examples, non-polyester materials may be used for the support layer 106, such as paper. However, these non-polyester materials may (1) be more expensive than polyester-based materials and (2) lack the functional properties of the polyester-based materials. For example, the non-polyester materials may have lower melting points than the polyester-based materials. Further, the non-polyester materials may be less rigid than the polyester-based materials, thereby providing less structural support to the drug resistant laminate 100. The support layer 106 may be used as a printing substrate to print label information (textual and/or graphical) regarding the pharmaceutical product contained within the drug resistant film. In some examples, the support layer 106 may be printed on via flexographic and/or gravure printing techniques. As with the first lamination layer 108, the second lamination layer 110 may be used to affix the support layer 106 to the aluminum foil layer 104 via any practical lamination process, such as such as adhesive lamination, extrusion lamination, or heat lamination. Accordingly, in adhesive lamination, the second lamination layer 110 may be any appropriate solvent-based, water-based, or solventless adhesive. In extrusion lamination, the second lamination layer 110 may be an extruded molten polymer resin. In heat lamination, the second lamination layer 110 may be an adhesive which must be heated to affix the support layer 106 to the aluminum foil layer 104.

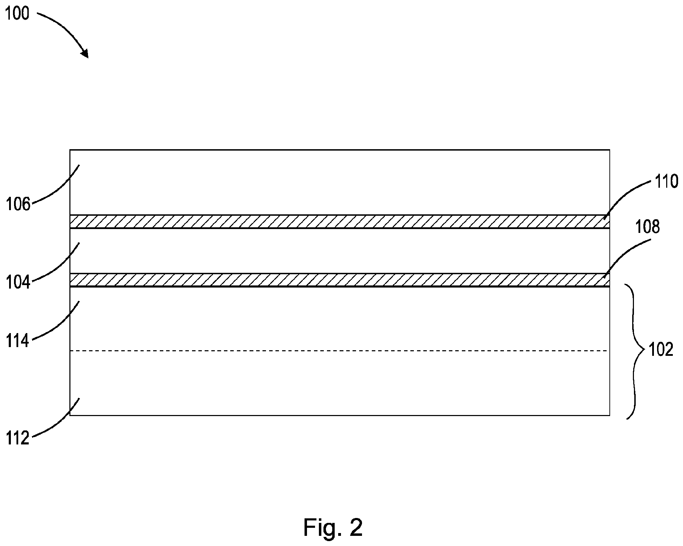

FIG. 2 illustrates a drug resistant laminate 100 having a coextruded polyamide sealing layer 100 with two sublayers. In the non-limiting example of FIG. 2, the polyamide sealing layer 100 includes a sealing sublayer 112 and a backing sublayer 114. The sealing sublayer 112 is arranged to contact the drug, while the backing sublayer 114 is affixed to the aluminum foil layer 104 via the first lamination layer 108. The sealing sublayer 112 and the backing sublayer 114 may be made of different polyamide resins such that the sealing sublayer 112 has a lower melting point than the backing sublayer 114. For example, the sealing sublayer 112 could be a copolymer such as polyamide 6.6 or polyamide 12, while the backing sublayer 114 could be polyamide 6. Further to this example, the sealing sublayer 112 may have a melting point of 130 degrees Celsius to 200 degrees Celsius, preferably between 130 degrees Celsius and 150 degrees Celsius. The backing sublayer 114 may have a melting point between 170 degrees Celsius and 260 degrees Celsius, preferably between 170 degrees Celsius and 210 degrees Celsius. The lower melting point of the sealing sublayer 112 enables the sealing sublayer 112 to more easily seal to another drug resistant laminate (or to itself) to form a pouch without melting other components of the drug resistant laminate 100. Further, the melting point of the sealing sublayer 112 is also less than a melting point of the support layer 106. In some examples, the support layer 106 may have a melting point of approximately 250 degrees Celsius. The lower melting point of the polyamide of the sealing sublayer 112 is enabled by the addition of co-monomers to the polyamide, resulting in a copolymer. This step of adding co-monomers to the polyamide also results in increased manufacturing costs relative to the other polyamide implementations.

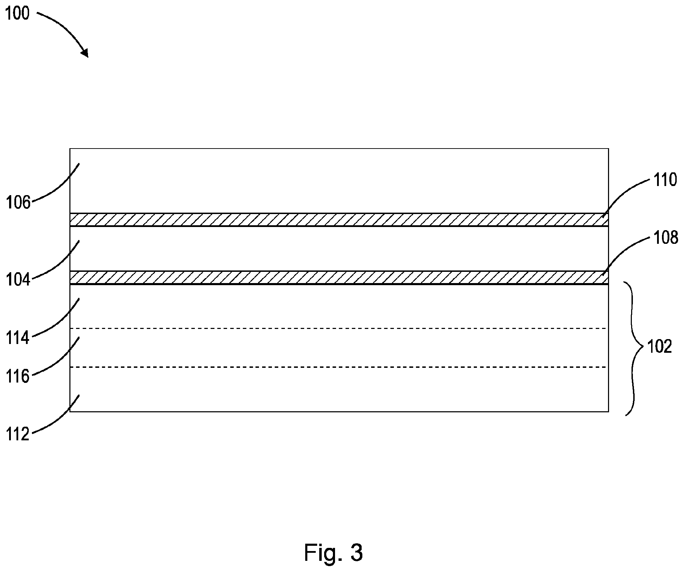

FIG. 3 illustrates a variation of FIG. 2 wherein the coextruded polyamide sealing layer 102 also includes an intermediate sublayer 116 arranged between the sealing sublayer 112 and the backing sublayer 114. The intermediate sublayer 116 may provide additional drug resistance to the polyamide sealing layer 102. In other examples, the coextruded polyamide sealing layer 102 may include more than one intermediate sublayer 116. In some examples, the intermediate sublayer 116 may be made of the same material (and therefore have the same melting point) as the sealing sublayer 112. In other examples, the intermediate sublayer 116 may be made of the same material (and therefore have the same melting point) as the backing sublayer 114. In further examples, the intermediate sublayer 116 may be made of a different material than both the sealing and backing sublayers 112, 114. In this case, the intermediate sublayer 116 may have a higher melting point than the sealing sublayer 112, but a lower melting point than the backing sublayer 114. Accordingly, the intermediate sublayer 116 will act as a transition layer between the sealing sublayer 112 and the backing sublayer 114 to aid the sealing process by being partially molten during sealing.

As described above, the drug resistant laminate 100 should provide a number of important features. First, the polyamide sealing layer 102 of the drug resistant laminate 100 should resist any degradation from interaction with the drug carried by the pharmaceutical product. Second, the polyamide sealing layer 102 should absorb as little of the drug as possible, ensuring the proper amount of the drug is supplied to the patient via the pharmaceutical product. Third, the combination of the polyamide sealing layer 102 and the aluminum foil layer 104 should provide "ultra-barrier" performance to preserve the drug against light, oxygen, and moisture. Fourth, the drug resistant laminate 100 should provide sufficient pouch integrity for a drug with a long shelf life (such as greater than two years). Fifth, the drug resistant laminate 100 should provide a printable surface to reproduce high quality graphics. Sixth, the drug resistant laminate 100 should be flexible enough to seal to itself via the polyamide sealing layer 102 to form a pouch or sachet. Seventh, the seals formed via the polyamide sealing layer 102 should prevent chemical contamination of the pharmaceutical product. When compared to other laminates having a sealing layer comprising polyacrylonitrile (also referred to as Barex^{®}) or cyclic olefin copolymers (COC), the drug resistant laminate 100 with the polyamide sealing layer 102 performs surprisingly well in terms of limiting drug absorption and packaging degradation, while sufficiently preserving the drug carried by the pharmaceutical product.

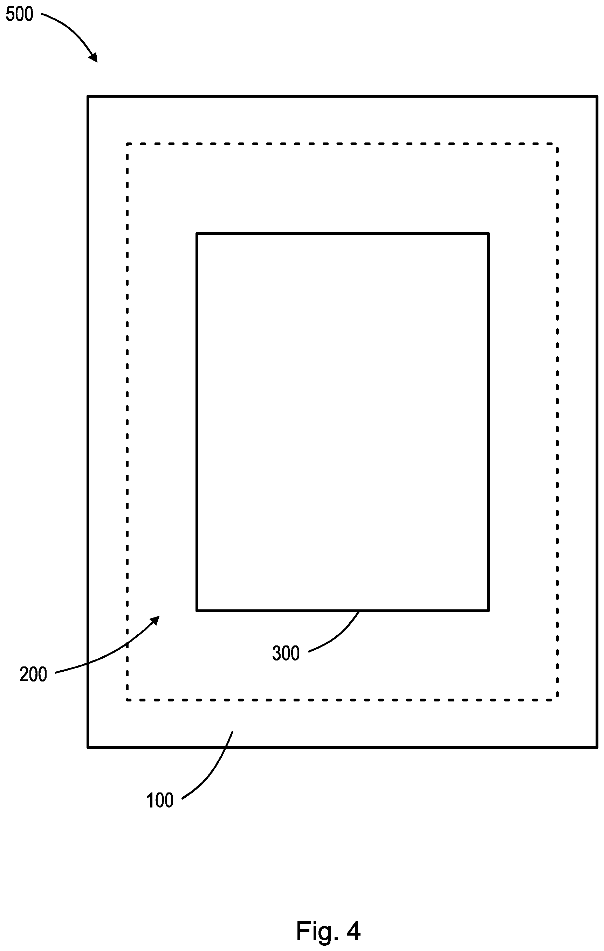

FIG. 4 illustrates a non-limiting example of a pharmaceutical product 300 arranged in a pouch 500. The pouch 500 may also be referred to as a sachet. In the example of FIG. 4, the packaged pharmaceutical product 300 is a transdermal patch enclosed by the pouch 500. A transdermal patch is a medicated adhesive patch that is placed a patient to deliver a specific dose of medication through their skin and into their bloodstream. Transdermal drug delivery provides a number of advantages over other types of drug delivery (oral, topical, intravenous, intramuscular, etc.), including controlled release of the drug into the patient through either a porous membrane or thin layers of medication embedded in an adhesive.

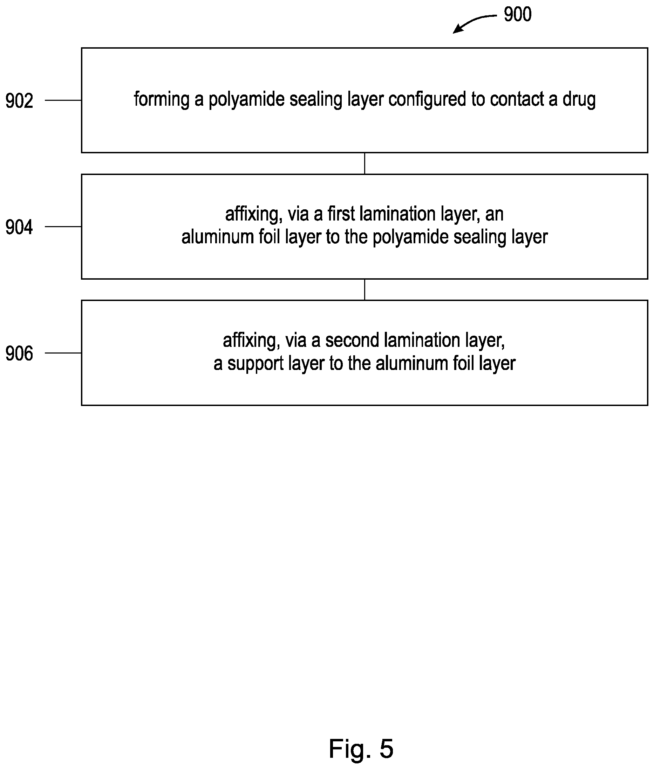

The pouch 500 may be formed by a heat-sealed drug resistant laminate 100. The transdermal patch may carry a drug, such as lidocaine, nicotine, fentanyl, estradiol, clonidine, ethinyl estradiol, oxybutynin, buprenorphine, granisitron, methylphenidate, scopolamine, acetylfentanyl, or rivastigmine. The aforementioned drugs are considered to be highly aggressive, increasing the likelihood that the drugs may permeate or be absorbed by packaging containing the transdermal patch. Further, transdermal patches typically carry a high amount of the drug. Accordingly, the pouch 500 requires sufficient barriers to prevent the drug from permeating or being absorbed by the pouch 500. The pouch 500 may be formed by heat sealing two drug resistant laminates 100 together to create a sealed interior volume 200. The dashed lines in FIG. 5 represent the boundaries of a sealed interior volume 200 which contains the transdermal patch 300. In some examples, one of the sides of the pouch 500 may be left unsealed, forming a three-sided seal. Further, the support layer 106 of the drug resistant laminate 100 may form a printable exterior surface for the pouch 500. Accordingly, textual and/or graphical information may be printed on the support layer 106, such as safety information. In other examples, the pouch 500 may be formed by folding over a single drug resistant laminate 100 and sealing the single drug resistant laminate 100 to itself.

The performance of the pouch 500 implementing the drug resistant laminate 100 has been validated experimentally against a variety of control pouches. In one such experiment, a small inventive pouch 500 was formed to contain a transdermal patch, branded as NicoDerm^{®}, carrying nicotine. In this experiment, a transdermal patch was sealed inside the control pouches and the inventive pouch 500 for a period of 70 days at a constant temperature of 60 degrees Celsius.

The inventive pouch 500 used in this experiment included a bidirectionally oriented polyamide sealing layer 102. The polyamide sealing layer 102 was formed by biaxially stretching a polyamide 6 resin to a thickness of 15 microns. The polyamide 6 resin had a relative viscosity of 3.3. The relative viscosity was measured according to ISO 307 with 1% polyamide 6 solution in 96% sulfuric acid solvent at 25 degrees Celsius. The polyamide sealing layer 102 was affixed to an aluminum foil layer 104 by a first lamination layer 108. The aluminum foil layer 104 was 9 microns thick. The aluminum foil layer 104 was affixed to the support layer 106 by a second lamination layer 110. In this experiment, the support layer 106 was formed of BOPET. The first and second lamination layers 108, 110 were applied at 2-3 grams per square meter. The final drug resistant laminate 100 was prepared using a laminator machine to adhesively bond the layers together. The inventive pouch 500 was then formed by heat sealing together two drug resistant laminates 100.

This experiment utilized three control pouches formed by control laminates. For each of the control laminates, the polyamide sealing layer 102 of the inventive drug resistant laminate 100 was replaced by a different sealing film. A first control laminate used a 25-micron thick Barex^{®} sealant film. The Barex^{®} sealant film was made with acrylonitrile-methyl acrylate copolymer. A second control laminate used a 25-micron thick cyclic olefin copolymer (COC) formed via blown film process. A third control laminate used a 25-micron thick ionomer sealing film.

The inventive pouch 500 and the control pouches were each aged at 60 degrees Celsius for 70 days. Surprisingly, the inventive pouch 500 performed similarly to the control pouches implementing Barex^{®} and COC. The aging of the inventive pouch 500 resulted in no visual delamination, no visual discoloration (other than the area touching the transdermal patch), no signs of drug absorption into the sealing layer, and the seals remained intact. By contrast, the aging of the control pouch implementing the ionomer sealing film resulting in visual delamination of the sealant film from the aluminum foil layer, discoloration all over the internal surface of the pouch, signs of severe drug absorption into the sealant layer, and compromised seals.

FIG. 5 is a flowchart of a method for manufacturing a drug resistant laminate 100. With reference to FIGS. 1-5, the method 900 includes, in step 902, forming a polyamide sealing layer 102 configured to contact a drug.

The method 900 further includes, in step 904, affixing, via a first lamination layer 108, an aluminum foil layer 104 to the polyamide sealing layer 102.

The method 900 further includes, in step 906, affixing, via a second lamination layer 110, a support layer 106 to the aluminum foil layer 104.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Particular embodiments of the invention are described in the following numbered paragraphs:
Paragraph 1. A drug resistant laminate, comprising:
   a polyamide sealing layer configured to contact a drug;
   an aluminum foil layer affixed to the polyamide sealing layer via a first lamination layer; and
   a support layer affixed to the aluminum foil layer via a second lamination layer.
Paragraph 2. The drug resistant laminate of Paragraph 1, wherein the polyamide sealing layer is a coextruded layer comprising a sealing sublayer arranged to contact the drug and a backing sublayer arranged to be affixed to the aluminum foil layer via the first lamination layer.
Paragraph 3. The drug resistant laminate of Paragraph 2, wherein a melting point of the sealing sublayer is less than a melting point of the backing sublayer.
Paragraph 4. The drug resistant laminate of Paragraph 3, wherein the melting point of the sealing sublayer is approximately 130 degrees Celsius to 150 degrees Celsius.
Paragraph 5. The drug resistant laminate of Paragraph 2, wherein the polyamide sealing layer comprises one or more of polyamide 6, polyamide 6.6, and/or polyamide 12.
Paragraph 6. The drug resistant laminate of Paragraph 2, wherein a melting point of the support layer is greater than a melting point of the backing sublayer of the polyamide sealing layer.
Paragraph 7. The drug resistant laminate of Paragraph 1, wherein a melting point of the support layer is approximately 200 degrees Celsius to 250 degrees Celsius.
Paragraph 8. The drug resistant laminate of Paragraph 1, wherein the polyamide sealing layer is mono-directionally oriented.
Paragraph 9. The drug resistant laminate of Paragraph 1, wherein the polyamide sealing layer is bi-directionally oriented.
Paragraph 10. The drug resistant laminate of Paragraph 1, wherein the support layer comprises polyamide.
Paragraph 11. The drug resistant laminate of Paragraph 1, wherein the support layer comprises biaxially oriented polyethylene terephthalate (BOPET).
Paragraph 12. The drug resistant laminate of Paragraph 1, wherein the drug is lidocaine, nicotine, fentanyl, estradiol, clonidine, ethinyl estradiol, oxybutynin, buprenorphine, granisitron, methylphenidate, scopolamine, acetylfentanyl, or rivastigmine.
Paragraph 13. The drug resistant laminate of Paragraph 1, wherein the support layer is approximately 5 microns thick to 100 microns thick.
Paragraph 14. The drug resistant laminate of Paragraph **1,** wherein the aluminum foil layer is approximately 5 microns thick to 30 microns thick.
Paragraph 15. The drug resistant laminate of Paragraph **1,** wherein the polyamide sealing layer is approximately 5 microns thick to 100 microns thick.
Paragraph 16. A method for manufacturing a drug resistant laminate, comprising:
   forming a polyamide sealing layer configured to contact a drug;
   affixing, via a first lamination layer, an aluminum foil layer to the polyamide sealing layer; and
   affixing, via a second lamination layer, a support layer to the aluminum foil layer.
Paragraph 17. The method of Paragraph 16, wherein forming the polyamide sealing layer comprises mono-axially or bi-axially stretching the polyamide sealing layer.
Paragraph 18. The method of Paragraph 16, wherein forming the polyamide sealing layer comprises coextruding a sealing sublayer arranged to contact the drug and a backing sublayer arranged to be affixed to the aluminum foil layer via the first lamination layer.
Paragraph 19. The method of Paragraph 18, wherein a melting point of the sealing sublayer is less than a melting point of the backing sublayer.
Paragraph 20. The method of Paragraph 18, wherein a melting point of the support layer is greater than a melting point of the backing sublayer of the polyamide sealing layer.

## Claims

1. A drug resistant laminate, comprising:
a polyamide sealing layer configured to contact a drug;
an aluminum foil layer affixed to the polyamide sealing layer via a first lamination layer; and
a support layer affixed to the aluminum foil layer via a second lamination layer.

2. The drug resistant laminate of claim **1,** wherein the polyamide sealing layer is a coextruded layer comprising a sealing sublayer arranged to contact the drug and a backing sublayer arranged to be affixed to the aluminum foil layer via the first lamination layer.

3. The drug resistant laminate of claim 2, wherein a melting point of the sealing sublayer is less than a melting point of the backing sublayer.

4. The drug resistant laminate of claim 3, wherein the melting point of the sealing sublayer is approximately 130 degrees Celsius to 150 degrees Celsius.

5. The drug resistant laminate of claim 2, wherein the polyamide sealing layer comprises one or more of polyamide 6, polyamide 6.6, and/or polyamide 12.

6. The drug resistant laminate of claim 2, wherein a melting point of the support layer is greater than a melting point of the backing sublayer of the polyamide sealing layer.

7. The drug resistant laminate of claim **1,** wherein a melting point of the support layer is approximately 200 degrees Celsius to 250 degrees Celsius.

8. The drug resistant laminate of claim **1,** wherein the polyamide sealing layer is mono-directionally oriented or bi-directionally oriented.

9. The drug resistant laminate of claim 1, wherein the support layer comprises polyamide.

10. The drug resistant laminate of claim 1, wherein the support layer comprises biaxially oriented polyethylene terephthalate (BOPET).

11. The drug resistant laminate of claim 1, wherein the drug is lidocaine, nicotine, fentanyl, estradiol, clonidine, ethinyl estradiol, oxybutynin, buprenorphine, granisitron, methylphenidate, scopolamine, acetylfentanyl, or rivastigmine.

12. The drug resistant laminate of claim 1, wherein the support layer is approximately 5 microns thick to 100 microns thick, wherein the aluminum foil layer is approximately 5 microns thick to 30 microns thick, and wherein the polyamide sealing layer is approximately 5 microns thick to 100 microns thick.

13. A method for manufacturing a drug resistant laminate, comprising:
forming a polyamide sealing layer configured to contact a drug;
affixing, via a first lamination layer, an aluminum foil layer to the polyamide sealing layer; and
affixing, via a second lamination layer, a support layer to the aluminum foil layer.

14. The method of claim 13, wherein forming the polyamide sealing layer comprises mono-axially or bi-axially stretching the polyamide sealing layer.

15. The method of claim 13, wherein forming the polyamide sealing layer comprises coextruding a sealing sublayer arranged to contact the drug and a backing sublayer arranged to be affixed to the aluminum foil layer via the first lamination layer.
